# FASCICULE DE BREVET EUROPEEN

(11) **EP 2 671 140 B1**
(45) Date de publication et mention de la délivrance du brevet: **12.07.2017**
(21) Numéro de dépôt: 12706635.5
(22) Date de dépôt: 27.01.2012
(51) Int. Cl.: G06F 3/041, G06F 3/044, G06F 3/048

(54) **PROCEDE ET DISPOSITIF D'ACQUISITION DE DONNEES D'UN CAPTEUR TACTILE MATRICIEL MULTICONTACTS**
VERFAHREN UND VORRICHTUNG FÜR DATENERFASSUNG MIT EINEM MEHRFACHBERÜHRUNGS-CROSSBAR-NETZWERKSENSOR
METHOD AND DEVICE FOR ACQUIRING DATA FROM A MULTI-TOUCH CROSSBAR-NETWORK SENSOR

(30) Priorité: 03.02.2011 FR 1150868; 24.06.2011 FR 1155655
(43) Date de publication de la demande: 11.12.2013
(73) Titulaire: Nissha Printing Co., Ltd., Kyoto-shi, Kyoto 604-8551 (JP)
(72) Inventeur: OLIVIER, Julien, F-33800 Bordeaux (FR)
(74) Mandataire: Müller-Boré & Partner Patentanwälte PartG mbB
(86) Numéro de dépôt international: PCT/FR2012/050173
(87) Numéro de publication internationale: WO 2012/104524

(56) Documents cités:
- EP-A2- 2 256 598
- EP-B1- 1 719 047
- WO-A2-2005/114369
- US-A1- 2010 097 328

## Description

La présente invention concerne un procédé d'acquisition de données d'un capteur tactile matriciel multicontacts.

Elle concerne également un tel capteur tactile matriciel multicontacts et un écran tactile comprenant de manière juxtaposée un écran de visualisation et un capteur tactile matriciel multicontacts.

De manière générale, la présente invention concerne l'acquisition de données représentatives d'un ou plusieurs contacts ou points d'appuis exercés sur la surface d'un capteur tactile.

Un capteur matriciel est constitué d'un ensemble de cellules disposées en ligne et en colonne. Dans son fonctionnement le plus global, ces cellules sont balayées séquentiellement de façon à mesurer la présence de points de contact ou de points d'appuis.

De tels capteurs tactiles multicontacts et leur procédé d'analyse sont décrits par exemple dans les documents EP 1 719 047 ou EP 2 142 980.

Dans le document EP 2 142 980, les cellules sont constituées d'un matériau agissant comme une diode.

De la même façon, la présente invention concerne les capteurs tactiles utilisant une matrice de cellules actives comme par exemple de type TFT (Thin Film Transistor), de type photodiode qui peuvent s'intégrer directement dans la matrice d'un écran LCD (Liquid cristal Display) ou encore de type piézo-électrique.

Dans le document EP 1 719 047, le capteur tactile matriciel est constitué d'un réseau matriciel de pistes conductrices disposées selon des lignes et des colonnes, des cellules étant ainsi définies au niveau de chaque intersection des lignes et des colonnes du réseau matriciel.

L'acquisition des données est réalisée en balayant séquentiellement chaque cellule du réseau matriciel, c'est-à-dire en alimentant successivement chaque ligne du réseau matriciel et en mesurant, pour chaque ligne alimentée, et au niveau successivement de chaque colonne une caractéristique électrique représentative d'un niveau d'impédance.

L'ensemble de ces caractéristiques électriques représentatives d'un niveau d'impédance de chaque cellule est alors mémorisé.

Grâce à ce balayage séquentiel des cellules, il est possible de détecter simultanément lors de chaque phase de balayage, plusieurs zones de contact sur le capteur tactile.

Les données mesurées, et notamment le niveau d'impédance de chaque cellule, sont enregistrées.

Du fait de l'enregistrement de l'ensemble des données acquises à chaque phase de balayage, il est nécessaire de disposer d'une mémoire électronique de grande taille, augmentant ainsi le coût de fabrication du capteur tactile.

Par ailleurs, dans le cadre d'un capteur tactile qui présente une grande sensibilité et peut comporter plusieurs milliers de cellules selon la taille de sa surface tactile, l'ensemble des données acquises pour chaque cellule est ensuite analysé afin de déterminer des zones englobantes, c'est-à-dire regroupant plusieurs cellules voisines dans le réseau matriciel et correspondant ainsi à un contact unique ou un point d'appui sur la surface tactile du capteur.

Cette étape de détermination de zones englobantes nécessite ainsi une analyse de l'image matricielle du capteur, obtenue lors de la phase de balayage séquentiel, et induit un temps de latence dans la réponse du capteur.

Cette étape d'analyse de l'ensemble des données mémorisées est d'autant plus longue à mettre en oeuvre que l'image matricielle mémorisée est complexe. Lorsque cette étape d'analyse est réalisée en parallèle avec une phase de balayage, il est nécessaire de prévoir une taille de mémoire tampon suffisante pour enregistrer au moins deux images matricielles du capteur simultanément.

La présente invention a pour but de résoudre les inconvénients précités et de proposer un procédé d'acquisition de données d'un capteur tactile matriciel multicontacts ne nécessitant qu'une taille de mémoire électronique limitée, et réduisant le temps de latence nécessaire à l'analyse de l'image matricielle, améliorant ainsi les performances du système et le confort d'utilisation.

A cet effet, la présente invention concerne un procédé d'acquisition de données d'un capteur tactile matriciel multicontacts, comprenant un réseau matriciel de cellules, comprenant les étapes suivantes :
- balayage séquentiel des cellules du réseau matriciel ;
- mesure d'une caractéristique électrique au niveau de chaque cellule représentative d'un poids de chaque cellule.

Selon l'invention, ce procédé d'acquisition de données comprend en outre les étapes suivantes, pour chaque cellule :
- comparaison dudit poids avec une ou plusieurs valeurs significatives prédéterminées de poids ;
- enregistrement des données liées à ladite cellule, comprenant au moins ledit poids et les coordonnées de ladite cellule dans le réseau matriciel, lorsque le poids appartient à un intervalle de valeurs significatives ;
- vérification de l'existence d'un enregistrement de données liées à au moins une desdites cellules voisines comprises dans une zone de voisinage associée à ladite cellule ; et
- mise à jour d'une zone englobante existante par enregistrement dans ladite zone englobante existante des données liées à ladite cellule si des données liées à au moins une cellule voisine appartenant à ladite zone englobante existante ont été enregistrées.

En fonction du type de capteur tactile matriciel utilisé, le poids associé à chaque cellule peut être différent.

De manière générale, le poids correspond à un facteur caractérisant combien la cellule est touchée lors du procédé d'acquisition de données.

Notamment, ce poids peut être calculé en fonction d'une mesure d'impédance directement accessible à partir de la mesure d'une caractéristique électrique au niveau de chaque cellule.

Lors de la comparaison de ce poids avec une ou plusieurs valeurs significatives prédéterminées de poids, il est ainsi possible de vérifier si le poids est supérieur à une valeur significative prédéterminée, ou encore inférieur à une valeur significative prédéterminée, ou finalement compris dans un ou plusieurs intervalles de valeurs significatives prédéterminées.

De manière générale, l'étape de comparaison permet de vérifier si le poids de chaque cellule est significatif, c'est-à-dire si sa valeur correspond réellement à un appui au niveau de la cellule du capteur tactile matriciel.

On notera que les valeurs significatives prédéterminées utilisées lors de l'étape de comparaison peuvent varier en fonction de la cellule mesurée ou encore dans le temps, en fonction des conditions d'utilisation du capteur tactile matriciel.

Ainsi, on procède à un enregistrement sélectif des données mesurées pour chaque cellule lors des étapes de balayage séquentiel et de mesure d'une caractéristique électrique représentative du poids associé à cette cellule.

Ainsi, seules les données liées à des cellules correspondant à un point de contact sur le capteur tactile matriciel sont enregistrées.

Par ailleurs, la mise à jour au fur et à mesure de chaque zone englobante existante permet d'obtenir, lors même de l'acquisition des données, la localisation des zones englobantes constituées de cellules voisines ayant un poids significatif.

Le procédé d'acquisition des données conforme à l'invention évite ainsi l'enregistrement inutile de données liées à chaque cellule et supprime les phases d'analyse successives des données enregistrées en vue de déterminer les zones englobantes, celles-ci étant mises à jour au fur et à mesure de l'étape d'acquisition des données.

En pratique, le procédé d'acquisition comprend en outre une étape de création d'une nouvelle zone englobante par enregistrement des données de la cellule dans la nouvelle zone englobante si aucune donnée liée à une cellule voisine comprise dans la zone de voisinage associée à la cellule n'a été enregistrée.

La création des zones englobantes et leur mise à jour sont ainsi mises en oeuvre simultanément au fur et à mesure de l'acquisition des données lors du balayage séquentiel des cellules du réseau matriciel.

Selon un mode de réalisation avantageux de l'invention, la zone de voisinage associée à la cellule est constituée d'un nombre paramétrable de cellules voisines de la cellule dans le réseau matriciel.

Ainsi, l'étape de vérification de l'existence d'un enregistrement de données liée à une cellule voisine est limitée à une portion du réseau matriciel, au voisinage de la cellule traitée.

Cette portion du réseau matriciel peut correspondre ainsi à une surface de taille correspondant sensiblement à la taille d'une zone d'appui sur la surface tactile du capteur, au moyen par exemple d'un doigt de l'utilisateur.

En pratique, la zone de voisinage d'une cellule est constituée de cellules voisines balayées antérieurement à ladite cellule lors de l'étape de balayage séquentielle.

Cette caractéristique permet encore d'accélérer l'étape de vérification dès lors qu'elle se limite aux cellules voisines déjà balayées, ignorant ainsi les cellules voisines pour lesquelles aucun enregistrement de données ne peut exister dès lors que celles-ci n'ont pas encore fait l'objet du balayage séquentiel et de la mesure d'une caractéristique électrique.

Selon un autre aspect de l'invention, elle concerne un dispositif d'acquisition de données d'un capteur tactile matriciel multicontacts, comprenant un réseau matriciel de cellules, comprenant :
- des moyens de balayage séquentiel des cellules du réseau matriciel ;
- des moyens de mesure d'une caractéristique électrique au niveau de chaque cellule représentative d'un poids de chaque cellule.

Selon l'invention, ce dispositif d'acquisition de données comprend en outre :
- des moyens de comparaison dudit poids de chaque cellule avec une ou plusieurs valeurs significatives prédéterminées de poids ;
- des moyens d'enregistrement des données liées à la cellule, comprenant au moins le poids et les coordonnées de la cellule dans le réseau matriciel, lorsque le poids appartient à un intervalle de valeurs significatives ;
- des moyens de vérification de l'existence d'un enregistrement de données liées à au moins une des cellules voisines comprises dans une zone de voisinage associée à la cellule ; et
- des moyens de mise à jour d'une zone englobante existante par enregistrement dans la zone englobante existante des données liées à la cellule si des données liées à au moins une cellule voisine appartenant à la zone englobante existante ont été enregistrées.

La présente invention concerne également un capteur tactile matriciel multicontacts, comprenant un réseau matriciel de pistes conductrices constituées de lignes et de colonnes, des cellules étant définies aux intersections des lignes et des colonnes, et des moyens d'acquisition de données adaptés à mettre en oeuvre le procédé d'acquisition conforme à l'invention.

Elle concerne enfin un écran tactile, comprenant un écran de visualisation juxtaposé à un capteur tactile matriciel multicontacts tel que défini précédemment.

Ce dispositif de données, ce capteur tactile matriciel multicontacts et cet écran tactile présentent des caractéristiques et avantages analogues à ceux décrits précédemment en relation avec le procédé d'acquisition de données selon l'invention.

D'autres particularités et avantages de l'invention apparaîtront encore dans la description ci-après.

Aux dessins annexés, donnés à titre d'exemples non limitatifs :
- la figure 1 est une vue schématique en perspective d'un écran tactile selon un mode de réalisation de l'invention ;
- la figure 2 est une vue de dessus représentant schématiquement l'agencement des lignes et des colonnes de pistes conductrices d'un capteur tactile matriciel multicontacts selon un mode de réalisation ;
- la figure 3 est un diagramme fonctionnel détaillant les étapes du procédé d'acquisition de données conforme à un mode de réalisation de l'invention ;
- la figure 4 est une vue illustrant des cellules voisines comprises dans une zone de voisinage d'une cellule de réseau matriciel ;
- la figure 5 est un schéma illustrant l'étape de vérification de l'existence d'un enregistrement de données liées à une cellule voisine ;
- la figure 6 est un schéma illustrant la valeur du poids mesuré lors de la présence de deux points d'appui à proximité l'un de l'autre sur un capteur tactile de type capacitif ;
- les figures 7 et 8 sont des schémas illustrant une étape d'analyse complémentaire du procédé d'acquisition de données illustré à la figure 3, dans le cadre d'une mise en oeuvre sur un capteur tactile de type capacitif ;
- la figure 9 est une vue schématique illustrant des zones englobantes constituées d'un ensemble de cellules du réseau matriciel ; et
- la figure 10 est un schéma illustrant l'étape de calcul de la position d'un barycentre d'une zone englobante afin de déterminer un curseur.

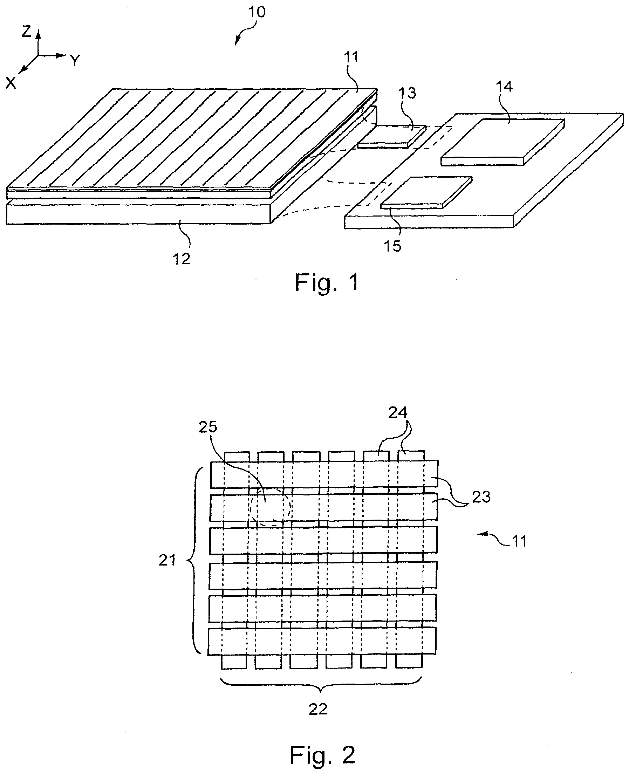

On va décrire tout d'abord en référence à la figure 1 un écran tactile 10 conforme à un mode de réalisation de l'invention.

Cet écran tactile 10 comprend un capteur tactile matriciel multicontacts 11 juxtaposé à un écran de visualisation 12.

Dans ce mode de réalisation et de manière non limitative, le capteur tactile matriciel multicontacts 11 est disposé au-dessus de l'écran de visualisation 12.

En particulier, ce capteur tactile 11 doit dans ces conditions être transparent afin de permettre la visualisation des données affichées sur l'écran de visualisation sous-jacent 12.

L'écran tactile 10 comporte également une interface de capture 13, un processeur principal 14 et un processeur graphique 15.

L'interface de capture 13 permet notamment d'acquérir des données mesurées au niveau du capteur tactile multicontacts 11.

Cette interface de capture 13 contient les circuits d'acquisition et d'analyse nécessaires à l'acquisition des données, qui peuvent ensuite être transmises au processeur principal 14 pour traitement, puis mise en oeuvre des différentes fonctions de l'écran tactile 10.

Seul le mode d'acquisition des données représentatives des touchers sur le capteur tactile 11 sera détaillé ci-après, l'exploitation des touchers par le processeur principal 14 n'étant pas décrite ici.

On se rapportera avantageusement aux exemples de réalisation décrits dans le document EP 1 719 047 concernant les différentes applications et utilisations d'un tel écran tactile 10.

On a illustré de manière schématique à la figure 2 un exemple de capteur tactile matriciel 11 tel que mis en oeuvre à la figure 1.

Ce capteur tactile matriciel 11 comprend un réseau matriciel 21, 22 de pistes conductrices, les deux réseaux 21, 22 étant disposés de manière non parallèle.

Ces réseaux 21, 22 de pistes conductrices forment ainsi des lignes 23 et des colonnes 24, des cellules 25 étant définies aux intersections de ces lignes 23 et de ces colonnes 24.

Bien entendu, dans toute la suite de la description, la notion de lignes et de colonnes est interchangeable selon l'orientation du capteur tactile matriciel 11.

Les réseaux 21, 22 de pistes conductrices sont par exemple réalisés en un matériau conducteur, de préférence translucide, et par exemple au moyen d'oxydes de métaux transparents tels que l'ITO (Oxyde Indium Etain), de solutions à base de nano particules métalliques ou encore de micros fils conducteurs.

Le réseau de pistes conductrices inférieures (par exemple les lignes 23) peut être positionné sur une couche de verre et le réseau de pistes conductrices supérieures (par exemple les colonnes 24) peut être positionné sous une couche de polyéthylène téréphtalate (PET).

Une couche d'air sépare les deux réseaux 21, 22 de pistes conductrices de telle sorte que les lignes 23 et les colonnes 24 ne soient pas en contact électrique.

Lorsqu'un appui est réalisé sur la surface extérieure du capteur tactile matriciel 11, l'impédance au niveau de chaque cellule 25 qui correspond à un toucher de la surface du capteur tactile matriciel 11 est modifiée.

Le capteur tactile matriciel 11 peut être par exemple un capteur de type résistif : lors d'un toucher ou appui sur la surface extérieure du capteur tactile matriciel 11, les pistes conductrices des réseaux matriciels 21, 22 sont mises en contact au niveau d'une ou plusieurs cellules 25 du réseau matriciel, de telle sorte qu'une résistance de contact est créée au niveau de ces cellules 25 et peut être détectée comme explicité ultérieurement.

Alternativement, le capteur tactile matriciel 11 peut être un capteur de type capacitif projeté : la position d'un doigt en regard d'une cellule 25 placée à l'intersection d'une ligne et d'une colonne modifie l'impédance au niveau de cette intersection, qui peut également être détectée comme décrit ultérieurement.

Bien entendu, les exemples de réalisation donnés ci-dessus du capteur tactile matriciel 11 sont purement illustratifs, le procédé d'acquisition de données décrit ci-après pouvant s'appliquer à tous types de capteurs tactiles définissant un réseau matriciel de cellules.

L'ensemble des moyens décrits précédemment en référence à la figure 1, et notamment l'interface de capture 13 et le microprocesseur 14 sont adaptés à intégrer un dispositif d'acquisition de données pour mettre en oeuvre le procédé d'acquisition de données qui sera décrit ci-dessous.

A cet égard, l'interface de capture 13 et le microprocesseur 14 intègrent notamment des moyens de balayage séquentiel du capteur tactile 11 et de mesure d'une caractéristique électrique.

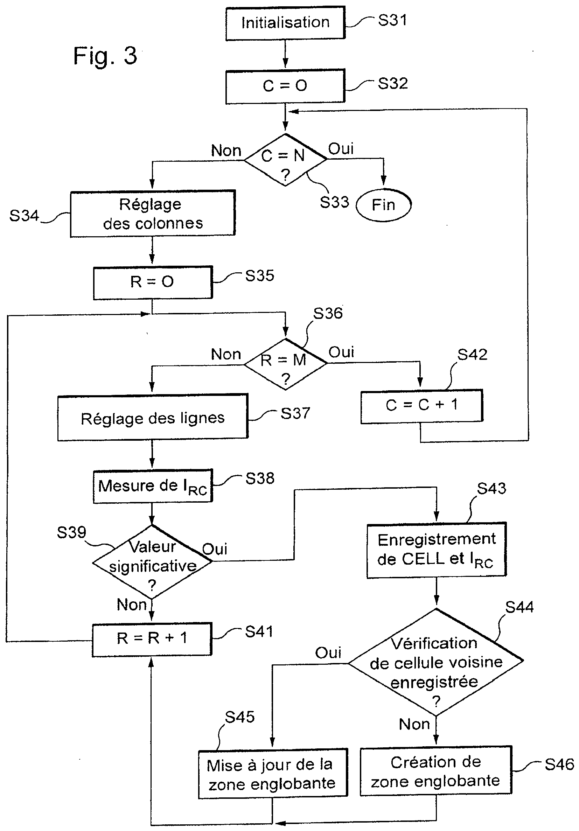

On va décrire à présent en référence à la figure 3 le procédé d'acquisition de données selon un mode de réalisation de l'invention.

Dans son principe, le procédé d'acquisition de données consiste dans ce mode de réalisation à balayer séquentiellement les différentes cellules 25 du réseau matriciel afin de détecter les différentes zones de contact au niveau du capteur tactile matriciel lors d'une phase de balayage.

Le procédé d'acquisition comporte tout d'abord une étape d'initialisation S31 mise en oeuvre au début de chaque nouvelle phase de balayage afin de réinitialiser l'ensemble des paramètres décrits ci-après, permettant de détecter les différentes zones de contact sur le capteur tactile matriciel 11.

Une étape de balayage séquentiel des cellules 25 du capteur tactile matriciel 11 est ensuite mise en oeuvre afin de mesurer, au niveau de chaque cellule 25, une caractéristique électrique.

Dans son principe, cette étape de balayage séquentiel consiste à injecter un signal électrique, de manière séquentielle, dans un réseau de pistes conductrices du réseau matriciel, et par exemple les lignes 23, et à mesurer une caractéristique électrique sur l'autre réseau de pistes conductrices, et par exemple successivement sur les colonnes 24.

Dans le cas d'un capteur résistif, lorsqu'un appui est réalisé sur la surface extérieure du capteur tactile matriciel, les lignes 23 et les colonnes 24 viennent en contact au niveau d'une ou plusieurs cellules 25 disposées au croisement des lignes et colonnes, de telle sorte que la mesure d'une caractéristique électrique aux bornes de chaque colonne, par exemple une tension, est représentative d'une modification de la résistance du circuit au niveau de chaque cellule 25 correspondant à un point d'appui.

De manière similaire, dans un capteur de type capacitif, la mesure d'une caractéristique électrique aux bornes de chaque colonne permet de détecter la variation d'impédance, qui est ici un niveau de capacitance, représentative d'un toucher au niveau d'une ou plusieurs cellules du réseau matriciel.

La mesure d'une caractéristique électrique permet ainsi d'obtenir une valeur représentative d'un poids associé à chaque cellule.

Ce poids est ici fonction du niveau d'impédance (résistance, capacitance) au niveau de la cellule, qui est modifié par la présence d'un toucher en regard de la cellule.

Les étapes de balayage séquentiel et de mesure d'une caractéristique électrique sont détaillées ci-après en référence à la figure 3.

Dans cet exemple de réalisation, on considère un réseau matriciel constitué de N colonnes C et de M lignes R. Un tel réseau matriciel comporte ainsi M x N cellules.

Une étape d'initialisation S32 permet de prendre en compte la première colonne C = 0.

Dans une étape de test S33, on vérifie si la colonne courante C a pour valeur N.

Dans l'affirmative, l'étape de balayage séquentiel des cellules 25 est terminée.

Dans la négative, on effectue les réglages nécessaires pour obtenir une mesure correcte sur la colonne courante C via un multiplexeur. Par exemple, on place toutes les colonnes autres que la colonne courante C à haute impédance Z afin d'éviter la circulation de courant dans ces autres colonnes.

Ces réglages sont réalisés lors d'une étape S34.

Une étape d'initialisation S35 permet ensuite de considérer la première ligne R = 0.

On vérifie dans une étape de test S36 si cette ligne courante R a pour valeur M.

Dans la négative, une étape de réglage S37 des lignes est effectuée via un multiplexeur. Par exemple, une alimentation sélective est mise en oeuvre, dans laquelle toutes les lignes autres que la ligne courante R sont placées à la masse à travers une résistance de rappel vers le niveau bas (en anglais "*pull-down resistor*").

Ainsi, seul un signal électrique est injecté dans la ligne courante R.

Une étape de mesure S38 est ensuite mise en oeuvre afin de mesurer une caractéristique électrique représentative d'un poids, lié au niveau d'impédance I_{RC} associé à la cellule CELL correspondant à l'intersection de la colonne courante C et de la ligne courante R.

Dans ce mode de réalisation, la caractéristique électrique mesurée est par exemple une tension. Un circuit ADC (acronyme du terme anglo-saxon *Analog Digital Converter*) permet de traduire la valeur analogique de tension en un signal numérique pouvant ensuite être utilisé lors de l'étape de comparaison S39.

Dans le cadre d'un capteur capacitif, on utiliserait un circuit CDC (acronyme du terme anglo-saxon *Capacitance to Digital Converter*)*.*

L'étape de comparaison S39 est ensuite mise en oeuvre afin de comparer la valeur du poids mesuré avec une ou plusieurs valeurs significatives de poids correspondant à un toucher réel sur la cellule courante.

Ici, dans le cadre d'une mesure d'une tension, directement représentative d'un niveau d'impédance (ici d'une résistance), l'étape de comparaison S39 consiste à comparer le niveau d'impédance mesuré I_{RC} avec un seuil d'impédance prédéterminé I_{T}.

Dans le cadre d'un capteur résistif, cette valeur de seuil d'impédance I_{T} est déterminée en fonction du niveau de bruit inhérent au système électronique.

Ainsi, l'utilisation d'une valeur seuil d'impédance I_{T} permet d'éliminer les mesures de caractéristiques électriques parasites, liées au système électronique, et qui ne représentent pas en réalité un point de contact sur le capteur tactile matriciel 11.

On notera que cette valeur de seuil d'impédance prédéterminée I_{T} peut éventuellement changer dans le capteur tactile matriciel 11 pour s'adapter à différents environnements électromagnétiques.

Ainsi, si à l'issue de l'étape de comparaison S39, le poids est considéré comme non significatif, c'est-à-dire ici, si le niveau d'impédance mesuré I_{RC} est inférieur au seuil d'impédance prédéterminé I_{T}, aucune donnée n'est mémorisée pour la cellule R, C et une étape d'incrémentation S41 est mise en oeuvre afin de considérer la ligne suivante R = R + 1.

Les étapes S36 et suivantes sont alors réitérées sur la ligne suivante.

Si lors de l'étape de test S36, la valeur de ligne courante R a atteint la valeur limite M, c'est-à-dire que l'ensemble des lignes R a été balayé, une étape d'incrémentation S42 est mise en oeuvre pour considérer la colonne suivante C = C + 1.

L'ensemble des étapes S33 et suivantes est alors réitéré.

Bien entendu, lors de l'étape de comparaison S39 permettant de déterminer si la valeur du poids associé à chaque cellule est considérée comme significative, d'autres types de comparaison peuvent être mis en oeuvre.

En particulier, lorsqu'il s'agit d'un capteur tactile de type capacitif, le poids mesuré est comparé à plusieurs valeurs significatives prédéterminées, permettant de vérifier si la valeur du poids mesuré est contenue dans un intervalle de valeurs significatives.

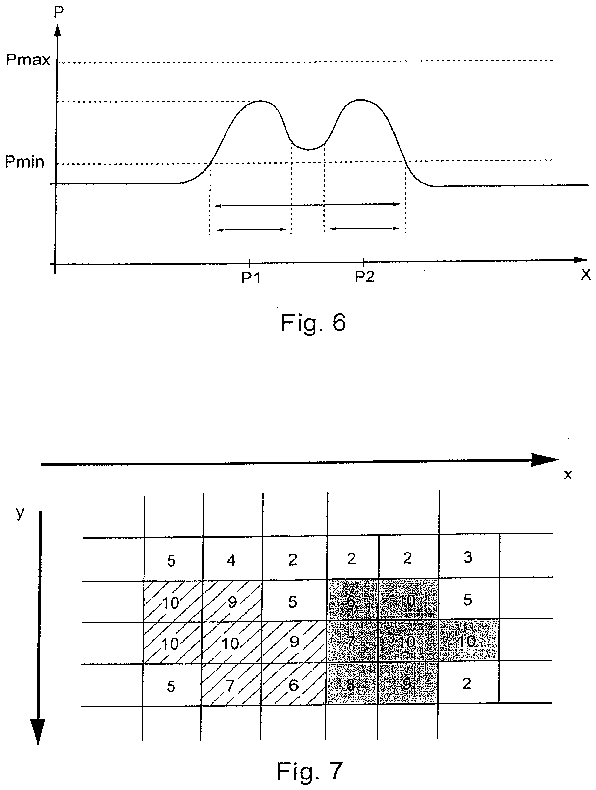

On décrira ultérieurement en référence aux figures 6 et 7 la suite du procédé d'acquisition de données dans un mode de réalisation mettant en oeuvre un capteur tactile de type capacitif.

Si à l'issue de l'étape de comparaison S39, le poids est considéré comme significatif, c'est-à-dire dans cet exemple, si le niveau d'impédance I_{RC} est supérieur au seuil d'impédance I_{T}, une étape d'enregistrement S43 est mise en oeuvre.

Lors de l'étape d'enregistrement S43, les données liées à la cellule courante CELL sont enregistrées, en particulier, les coordonnées de la cellule dans le réseau matriciel (CELL_X, CELL_Y) ainsi que le niveau d'impédance I_{RC} ou poids mesuré. Ce niveau d'impédance I_{RC} caractérise ainsi le toucher au niveau de la cellule CELL et est ici également appelé poids (WEIGHT) de la cellule CELL.

On notera ainsi que seules les données correspondant à des cellules CELL présentant un niveau d'impédance ou poids significatif sont ainsi enregistrées lors de l'étape d'enregistrement S43.

Une étape de vérification S44 est ensuite mise en oeuvre pour vérifier l'existence d'un enregistrement de données liées à une ou plusieurs cellules voisines Cv comprises dans une zone de voisinage de la cellule courante CELL.

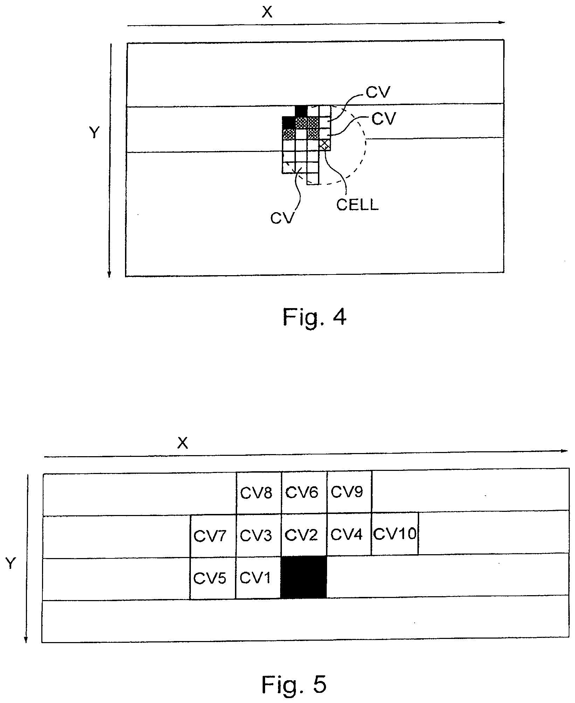

Cette étape de vérification S44 va être décrite plus en détail en référence aux figures 4 et 5.

La zone de voisinage associée à la cellule courante CELL est constituée de cellules voisines Cv de la cellule CELL dans le réseau matriciel.

Comme bien illustré à la figure 4, la zone de voisinage associée à la cellule traitée CELL est constituée d'un nombre prédéterminé, éventuellement paramétrable, de cellules voisines Cv de cette cellule CELL dans le réseau matriciel.

Dans l'exemple de réalisation illustré à la figure 4, la zone de voisinage associée à la cellule CELL est définie par la position de cette cellule, de coordonnées CELL_X, CELL_Y dans le réseau matriciel du capteur tactile 11 et un ensemble de cellules voisines Cv disposées à une distance prédéterminée de la cellule CELL dans le réseau matriciel.

Dans cet exemple, la distance prédéterminée correspond dans la direction horizontale et verticale du réseau matriciel à une distance de trois cellules séparant au maximum les cellules voisines Cv de la cellule courante CELL.

Ainsi, cette zone de voisinage correspond sensiblement aux cellules voisines Cv appartenant à un cercle ayant pour centre la cellule traitée CELL et pour rayon, la distance séparant la cellule CELL de la cellule voisine de coordonnées (CELL_X, CELL_Y-3) ou de la cellule voisine (CELL_X-3, CELL_Y).

On a illustré à la figure 4 une partie des cellules déjà balayées en considérant un balayage séquentiel des cellules consistant à alimenter chaque ligne séquentiellement de haut en bas de la figure 4 et à mesurer séquentiellement les colonnes de gauche à droite de la figure 4.

On a illustré à la figure 4 en carré blanc les cellules balayées pour lesquelles aucune donnée n'a été enregistrée, le poids mesuré n'étant pas significatif, en carré noirci les cellules balayées dont les données ont été enregistrées mais n'appartenant pas à la zone de voisinage, et en trait hachuré en croisillon, les cellules déjà balayées dont les données ont été enregistrées et appartenant à la zone de voisinage.

On notera que, de préférence, la zone de voisinage est constituée uniquement de cellules voisines Cv balayées antérieurement à la cellule courante CELL lors de l'étape de balayage séquentiel.

Ainsi, lors de l'étape de vérification S44, celle-ci est mise en oeuvre uniquement sur les cellules voisines Cv déjà balayées lors de l'étape de balayage séquentiel décrite précédemment.

De préférence, l'étape de vérification S44 de l'existence de données enregistrées pour des cellules Cv appartenant à la zone de voisinage est mise en oeuvre en suivant un ordre croissant en terme de distance, en partant des cellules les plus proches de la cellule courante CELL.

Ainsi comme illustré à la figure 5, on a numéroté à titre d'exemple non limitatif un ordre de balayage des cellules voisines Cv lors de l'étape de vérification S44 de l'existence de données enregistrées.

Ici, on examine successivement les données des cellules Cv1 de coordonnées (CELL_X, CELL_Y-1), Cv2 de coordonnées (CELL_X-1, CELL_Y), Cv3 de coordonnées (CELL_X-1, CELL_Y-1), Cv4 de coordonnées (CELL_X-1, CELL_Y+1), ...

Si à l'issue de l'étape de vérification S44, une cellule voisine Cv de la zone de voisinage présente un enregistrement de données liées à cette cellule voisine Cv, une étape de mise à jour S45 d'une zone englobante existante est mise en oeuvre.

Lors de cette étape de mise à jour, les données liées à la cellule courante CELL sont enregistrées dans la zone englobante existante.

Ainsi, dans l'exemple de réalisation illustré à la figure 4, la zone englobante existante après mise à jour comportera l'ensemble des données relatives aux cellules noircies, aux cellules hachurées et à la cellule courante CELL.

Les données enregistrées pour chaque cellule appartenant à la zone englobante existante comprennent notamment les coordonnées CELL_X, CELL_Y de chaque cellule CELL ainsi que le niveau d'impédance I_{R, C} ou poids mesuré pour cette cellule.

A l'inverse, si à l'étape de vérification S44, aucune donnée liée à une cellule voisine Cv comprise dans la zone de voisinage associée à la cellule courante CELL n'a été enregistrée, alors une étape de création S46 est mise en oeuvre pour créer une nouvelle zone englobante par enregistrement des données de la cellule courante CELL dans cette nouvelle zone englobante.

On peut ainsi au fur et à mesure de la mesure d'une caractéristique représentative d'un niveau d'impédance lors du balayage séquentiel des cellules du réseau matriciel, créer et mettre à jour les zones englobantes regroupant les cellules pertinentes enregistrées.

A l'issue des étapes de mise à jour S45 ou de création S46 de zones englobantes, le procédé d'acquisition réitère l'ensemble des étapes S36 et suivantes pour la ligne suivante R = R+1.

La phase de balayage séquentiel est terminée lorsque toutes les lignes R et les colonnes C ont été balayées.

Lors de la mise en oeuvre de chaque phase de balayage, l'ensemble du procédé illustré à la figure 3 est réitéré, l'ensemble des paramètres enregistrés pour chaque zone englobante étant réinitialisé à l'étape d'initialisation S31 comme décrit précédemment.

Afin d'avoir une bonne réactivité du capteur tactile et de suivre en temps réel l'évolution des touchers sur la surface du capteur tactile 11, les phases de balayage séquentiel sont mises en oeuvre à une fréquence de l'ordre de 100 fois par seconde.

Le procédé d'acquisition décrit précédemment, et notamment les étapes S43 et suivantes sont complétées par une étape d'analyse additionnelle dans le cadre d'une mise en oeuvre sur un capteur tactile dont les données de sortie sont analogiques, c'est-à-dire sous forme de Gaussienne (par exemple pour les capteurs de type capacitif, inductif ou encore de pression).

Comme indiqué précédemment, lorsqu'il s'agit par exemple d'un capteur tactile de type capacitif, le poids mesuré est comparé à plusieurs valeurs significatives prédéterminées.

Comme illustré à la figure 6, le poids mesuré dans le cadre d'un capteur capacitif est considéré comme significatif à l'étape de comparaison S39 décrite précédemment, lorsque la valeur du poids mesuré est comprise dans un intervalle de valeurs significatives Pmin, Pmax.

On a illustré à la figure 6 un exemple de valeurs de poids mesurés lorsque deux contacts ou points d'appui sont appliqués sur le capteur tactile de type capacitif, proches l'un de l'autre, et ici à proximité l'un de l'autre selon la direction X du réseau matriciel du capteur tactile.

Dans ce cas, deux points d'appui distincts (symbolisés par les références P1 et P2 à la figure 6) peuvent être considérés comme appartenant à une même zone englobante lors de la mise en oeuvre du procédé d'acquisition décrit précédemment.

En effet, comme illustré à la figure 6, la valeur du poids mesuré pour des cellules voisines situées entre les points d'appui P1 et P2 peut également être considérée comme significative lors de l'étape de comparaison S39 dès lors que les valeurs de poids induit par les deux points d'appui P1 et P2 se cumulent.

En effet, dans les capteurs de type capacitif, la position du point d'appui se déduit de la variation de charge accumulée sur les pistes conductrices inférieures induite par la présence du doigt au niveau des pistes conductrices supérieures.

Le signal mesuré correspondant à la répartition de la charge est une Gaussienne dont le sommet (ou pic) correspond à la position du doigt.

Lorsque deux doigts sont proches et sont positionnés au niveau des pistes conductrices supérieures, les deux signaux électriques caractéristiques s'additionnent et les valeurs mesurées sont la somme des deux Gaussiennes caractéristiques de chaque doigt.

Ainsi, comme illustré à la figure 7, lors de l'étape d'enregistrement S43, l'ensemble des cellules CELL présentant un poids significatif est enregistré, avec le niveau de poids mesuré représenté ici à titre d'exemples non limitatifs par une valeur numérique comprise entre 1 et 11.

Comme illustré à la figure 7, dans ce mode de réalisation, et uniquement à titre d'exemple, une cellule présente un poids significatif lorsque la valeur de ce poids est comprise entre 6 et 10 inclus.

Lors de l'étape de vérification S44 décrite précédemment, la zone englobante déterminée après mise à jour comportera l'ensemble des données relatives à la fois aux cellules présentant un poids significatif (cellules hachurées et cellules grisées sur la figure 7).

Afin d'éviter cette confusion de deux zones englobantes correspondant à des points d'appui distincts sur le capteur tactile, l'étape de vérification S44 est complétée par la mise en oeuvre d'une étape d'analyse des valeurs du poids mesuré et enregistré à l'étape d'enregistrement S43 pour un ensemble de cellules adjacentes incluant la cellule courante CELL de coordonnées (CELL_X, CELL_Y).

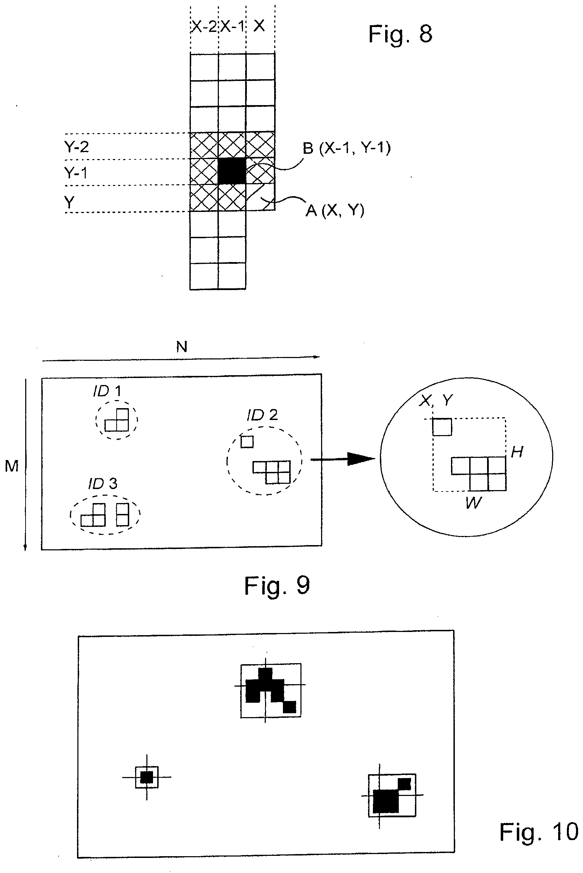

En pratique, comme illustré à la figure 8, pour chaque cellule acquise CELL (cellule A à la figure 8) de coordonnées (X, Y), on analyse les caractéristiques des cellules entourant la cellule voisine B de coordonnées (X-1, Y-1) à la figure 8.

En pratique, on compare les niveaux de poids mémorisés pour l'ensemble des cellules adjacentes à la cellule voisine B de coordonnées (X-1, Y-1).

Il est ainsi possible de détecter à partir des valeurs de poids si la cellule voisine B de coordonnées (X-1, Y-1) correspond à un pic ou à un creux du signal tel qu'illustré à la figure 6.

On notera que cette étape d'analyse complémentaire nécessite la présence d'une mémoire tampon supplémentaire capable de mémoriser pour les cellules déjà balayées la valeur du poids mesuré pour chaque cellule appartenant aux trois dernières colonnes et trois dernières lignes par rapport à la cellule courante CELL (ou cellule A à la figure 8).

Lorsque l'on détecte qu'une cellule voisine B de coordonnées (X-1, Y-1) correspond à un pic par rapport aux cellules adjacentes (valeur de poids supérieure ou égale à celle des cellules adjacentes), il est possible de séparer la zone englobante existante en deux zones englobantes distinctes et adjacentes illustrées schématiquement à la figure 7 d'une part par les cellules en traits hachurés et d'autre part par les cellules grisées.

Bien entendu, ce procédé d'analyse peut également être mis en oeuvre pour un nombre supérieur de points d'appui proches l'un de l'autre sur un capteur tactile de type capacitif et par exemple égal à trois.

On notera que la comparaison des poids deux à deux entre la cellule voisine B de coordonnées (X-1, Y-1) et les cellules adjacentes peut être mise en oeuvre selon un ordre de balayage prédéterminé des cellules adjacentes.

On notera par ailleurs que dans la mesure où le balayage est réalisé ligne par ligne de gauche à droite et colonne par colonne de haut en bas, on dispose, pour chaque cellule voisine B de coordonnées (X-1, Y-1), des valeurs de poids associées à l'ensemble des cellules adjacentes, c'est-à-dire de l'ensemble des cellules comprises dans la zone de coordonnées X-2 et X en abscisse et dans la zone de coordonnées Y-2 et Y en ordonnée, comme illustré à la figure 8.

On a illustré à la figure 9 un exemple d'un réseau matriciel pour lequel trois zones englobantes ID1, ID2, ID3 ont été détectées.

Comme indiqué précédemment, chaque zone englobante est notamment caractérisée par les coordonnées de chaque cellule CELL constituant cette zone englobante ainsi que le niveau d'impédance ou poids associé à chacune de ces cellules.

En outre, chaque zone englobante est caractérisée à titre d'exemple non limitatif par la hauteur H et la largeur W d'un rectangle circonscrit à l'ensemble des cellules CELL constituant la zone englobante.

Par ailleurs, la position de la zone englobante peut également être définie par les coordonnées d'un point spécifique de cette zone englobante, et par exemple, les coordonnées X, Y du coin supérieur gauche du rectangle circonscrit aux cellules constituant la zone englobante dans le réseau matriciel.

La zone englobante est également caractérisée par le poids cumulé correspondant à la somme des niveaux d'impédance ou poids de chaque cellule CELL appartenant à la zone englobante.

Bien entendu, l'ensemble de ces paramètres caractérisant la zone englobante (hauteur H, largeur W, position du coin supérieur gauche X, Y, poids cumulé, nombre de cellules CELL appartenant à la zone englobante ainsi que leurs coordonnées CELL_X, CELL_Y et leur niveau d'impédance ou poids associé) est mis à jour à chaque étape de mise à jour S45 de la zone englobante dès lors qu'une nouvelle cellule est ajoutée dans cette zone englobante.

On dispose ainsi à l'issue du procédé d'acquisition de données d'un ensemble de zones englobantes et des paramètres décrits précédemment les caractérisant.

Afin de gérer chaque zone de contact ou appui correspondant à chaque zone englobante ainsi constituée, on détermine des coordonnées d'un point unique associé à cette zone englobante.

Cette détermination d'un point unique dans le réseau matriciel du capteur tactile 11 permet d'associer un point unique à chaque toucher réalisé sur la surface tactile du capteur 11, afin d'en suivre ensuite l'évolution dans le temps lors de chaque phase de balayage successive.

Une solution peut consister à considérer comme point unique, le point ayant pour coordonnées dans le réseau matriciel, le centre géométrique du rectangle circonscrit à l'ensemble des cellules constituant la zone englobante.

Toutefois, afin de tenir compte de la répartition des cellules dans la zone englobante ainsi que des valeurs du niveau d'impédance ou poids associé à chacune de ces cellules, le point de contact est de préférence déterminé par le calcul d'un barycentre de la zone englobante, à partir des coordonnées CELL_X, CELL_Y de chaque cellule CELL appartenant à la zone englobante, pondérées par le niveau d'impédance I_{R, C} ou poids lié à chaque cellule.

Afin de mettre en oeuvre ce calcul de barycentre, on utilise la valeur du poids cumulé décrite précédemment, correspondant à la somme des niveaux d'impédance I_{R, C} ou poids de chaque cellule CELL appartenant à la zone englobante existante.

Le calcul du barycentre est mis en oeuvre classiquement en pondérant les coordonnées CELL_X, CELL_Y de chaque cellule sur les deux axes X, Y par son niveau d'impédance ou poids rapporté au poids cumulé de la zone englobante.

La position unique dans le capteur matriciel peut ensuite correspondre dans l'écran tactile à la position d'un curseur sur l'écran de visualisation comme illustré à la figure 10. Ce curseur permettant de commander un certain nombre d'actions sur cet écran ou sur un dispositif informatisé périphérique, commandé par cet écran tactile.

Grâce au procédé décrit précédemment, la détection des zones englobantes est réalisée en temps réel pendant l'acquisition des données et le balayage séquentiel du capteur.

Grâce à ce traitement simultané des données acquises, l'espace mémoire requis est diminué.

En effet, les algorithmes classiques exigent le traitement et le stockage de l'intégralité des données associées aux réseaux matriciels, et par exemple un espace mémoire suffisant pour stocker dans l'exemple précédent M x N valeurs d'impédance I_{R, C}.

Lorsqu'on souhaite en outre paralléliser l'acquisition des données avec le traitement et l'analyse de ces données, des mémoires tampons nécessitent deux à trois fois cet espace mémoire.

En enregistrant grâce au procédé décrit précédemment uniquement, et en temps réel, les données relatives aux zones englobantes, et non à l'ensemble des cellules du réseau matriciel, la taille de mémoire nécessaire peut être fortement diminuée.

En outre, la durée de traitement des données fournies par le capteur tactile est réduite.

La réactivité du capteur tactile au toucher de l'utilisateur est ainsi augmentée, offrant un meilleur confort d'utilisation.

## Revendications

1. Procédé d'acquisition de données d'un capteur tactile matriciel multicontacts (11), comprenant un réseau matriciel de cellules (25), comprenant les étapes suivantes :
- balayage séquentiel (S32-S37, S41, S42) des cellules du réseau matriciel ;
- mesure (S38) d'une caractéristique électrique au niveau de chaque cellule représentative d'un poids (I_{R, C}) de chaque cellule (25),
**caractérisé en ce qu'**il comprend en outre les étapes suivantes pour chaque cellule (CELL) :
- comparaison (S39) du poids (I_{R, C}) avec une ou plusieurs valeurs significatives prédéterminées de poids (I_{T}) ;
- enregistrement (S43) de données liées à ladite cellule (CELL), comprenant au moins ledit poids (I_{R, C}) et les coordonnées (CELL_X, CELL_Y) de ladite cellule (CELL) dans le réseau matriciel, lorsque le poids appartient à un intervalle de valeurs significatives ;
- vérification (S44) de l'existence d'un enregistrement de données liées à au moins une desdites cellules voisines (Cv) comprises dans une zone de voisinage associée à ladite cellule (CELL) ; et
- mise à jour (S45) d'une zone englobante existante par enregistrement dans ladite zone englobante existante des données liées à ladite cellule (CELL) si des données liées à au moins une cellule voisine (Cv) appartenant à ladite zone englobante existante ont été enregistrées.

2. Procédé d'acquisition de données conforme à la revendication 1, **caractérisé en ce qu'**il comprend en outre une étape de création (S46) d'une nouvelle zone englobante par enregistrement des données de ladite cellule (CELL) dans la nouvelle zone englobante si aucune donnée liée à une cellule voisine (Cv) comprise dans ladite zone de voisinage associée à ladite cellule (CELL) n'a été enregistrée.

3. Procédé d'acquisition de données conforme à l'une des revendications 1 ou 2, **caractérisé en ce que** ladite zone de voisinage associée à ladite cellule (CELL) est constituée d'un nombre paramétrable de cellules voisines (Cv) de ladite cellule (CELL) dans le réseau matriciel.

4. Procédé d'acquisition de données conforme à l'une des revendications 1 à 3, **caractérisé en ce que** ladite zone de voisinage associée à ladite cellule (CELL) est définie par la position de ladite cellule (CELL) dans le réseau matriciel et un ensemble de cellules voisines (Cv) disposées à une distance prédéterminée de ladite cellule (CELL) dans le réseau matriciel.

5. Procédé d'acquisition de données conforme à l'une des revendications 1 à 4, **caractérisé en ce que** ladite zone de voisinage est constituée de cellules voisines (Cv) balayées antérieurement à ladite cellule (CELL) lors de l'étape de balayage séquentiel (S32-S37, S41, S42).

6. Procédé d'acquisition de données conforme à l'une des revendications 1 à 5, **caractérisé en ce qu'**à ladite étape de mise à jour (S45) d'une zone englobante existante, un poids cumulé correspondant à la somme des poids (I_{R, C}) de chaque cellule (CELL) appartenant à ladite zone englobante existante est mis à jour.

7. Procédé d'acquisition de données conforme à la revendication 6, **caractérisé en ce qu'**il comprend en outre une étape de calcul de la position d'un barycentre d'une zone englobante à partir des coordonnées (CELL_X, CELL_Y) desdites cellules (CELL) appartenant à ladite zone englobante, pondérées par ledit poids (I_{R, C}) lié à chaque cellule (CELL) par rapport audit poids cumulé.

8. Procédé d'acquisition de données conforme à l'une des revendications 1 à 7, **caractérisé en ce qu'**il comprend en outre une étape d'analyse des valeurs des poids associés à un ensemble de cellules adjacentes incluant ladite cellule (CELL) afin d'identifier deux zones englobantes adjacentes dans ladite zone englobante existante.

9. Procédé d'acquisition de données conforme à l'une des revendications 1 à 8, lesdites cellules (25) étant définies à chaque intersection d'une ligne (23) et d'une colonne (24) d'un réseau de pistes conductrices constituées de lignes (23) et de colonnes (24), **caractérisé en ce que** l'étape de balayage séquentiel (S32-S37, S41, S42) des cellules (25) consiste à alimenter successivement chaque ligne (23) du réseau et à mesurer, pour chaque ligne alimentée, et au niveau successivement de chaque colonne (24), une caractéristique électrique représentative d'un niveau d'impédance (I_{R, C}).

10. Dispositif d'acquisition de données d'un capteur tactile matriciel multicontacts (11), comprenant un réseau matriciel de cellules (25), comprenant
- des moyens de balayage séquentiel (13, 14) des cellules (25) du réseau matriciel ;
- des moyens de mesure (13, 14) d'une caractéristique électrique au niveau de chaque cellule représentative d'un poids (I_{R, C}) de chaque cellule (25),
**caractérisé en ce qu'**il comprend en outre :
- des moyens de comparaison (13, 14) du poids (I_{R, C}) de chaque cellule (CELL) avec une ou plusieurs valeurs significatives prédéterminées de poids (I_{T}) ;
- des moyens d'enregistrement (13, 14) des données liées à ladite cellule (CELL), comprenant au moins ledit poids (I_{R, C}) et les coordonnées (CELL_X, CELL_Y) de ladite cellule (CELL) dans le réseau matriciel, lorsque le poids (I_{R, C}) appartient à un intervalle de valeurs significatives ;
- des moyens de vérification (13, 14) de l'existence d'un enregistrement de données liées à au moins une desdites cellules voisines (Cv) comprises dans une zone de voisinage associée à ladite cellule (CELL) ; et
- des moyens de mise à jour (13, 14) d'une zone englobante existante par enregistrement dans ladite zone englobante existante des données liées à ladite cellule (CELL) si des données liées à au moins une cellule voisine (Cv) appartenant à ladite zone englobante existante ont été enregistrées.

11. Capteur tactile matriciel multicontacts (11), comprenant un réseau matriciel (21, 22) de pistes conductrices constituées de lignes (23) et de colonnes (24), des cellules (25) étant définies aux intersections desdites lignes (23) et desdites colonnes (24), **caractérisé en ce qu'**il comprend des moyens d'acquisition (13, 14) de données adaptés à mettre en oeuvre le procédé d'acquisition conforme à l'une des revendications 1 à 9.

12. Ecran tactile (10), comprenant un écran de visualisation (12) juxtaposé à un capteur tactile matriciel multicontacts (11) conforme à la revendication 11.

## Patentansprüche

1. Verfahren zur Datenerfassung mittels eines mehrpoligen Matrix-Tastsensors (11), umfassend ein Matrixnetzwerk aus Zellen (25), wobei das Verfahren folgende Schritte umfasst:
- sequenzielles Abtasten (S32-S37, S41, S42) der Zellen des Matrixnetzwerks;
- Messen (S38) eines elektrischen Merkmals für jede Zelle, das charakteristisch für ein Gewicht (I_{R, C}) jeder Zelle (25) ist,
**dadurch gekennzeichnet, dass** das Verfahren überdies die folgenden Schritte für jede Zelle (CELL) umfasst:
- Vergleichen (S39) des Gewichts (I_{R, C}) mit einem oder mehreren vorgegebenen signifikanten Gewichtswerten (I_{T});
- Speichern (S43) von Daten, die auf die Zelle (CELL) bezogen sind, umfassend mindestens das Gewicht (I_{R, C}) und die Koordinaten (CELL_X, CELL_Y) der Zelle (CELL) in dem Matrixnetzwerk, wenn das Gewicht in einem Bereich von signifikanten Werten liegt;
- Verifizieren (S44) der Existenz einer Speicherung von auf mindestens eine der benachbarten Zellen (Cv) bezogenen Daten, die in einer Umgebungszone umfasst sind, die der Zelle (CELL) zugeordnet ist; und
- Aktualisieren (S45) einer vorhandenen eingrenzenden Zone durch Speichern der Daten, die auf die Zelle (CELL) bezogen sind, in der vorhandenen eingrenzenden Zone, wenn Daten, die auf mindestens eine benachbarte Zelle (Cv) bezogen sind, die der vorhandenen eingrenzenden Zone angehört, gespeichert wurden.

2. Verfahren zur Datenerfassung nach Anspruch 1, **dadurch gekennzeichnet, dass** es überdies einen Schritt der Erzeugung (S46) einer neuen eingrenzenden Zone umfasst, durch Speichern der Daten der Zelle (CELL) in der neuen eingrenzenden Zone, wenn keine Daten gespeichert sind, die auf eine benachbarte Zelle (Cv) bezogen sind, die in der Umgebungszone enthalten ist, die der Zelle (CELL) zugeordnet ist.

3. Verfahren zur Datenerfassung nach Anspruch 1 oder 2, **dadurch gekennzeichnet, dass** die Umgebungszone, die der Zelle (CELL) zugeordnet ist, aus einer parametrierbaren Anzahl von benachbarten Zellen (Cv) der Zelle (CELL) im Matrixnetzwerk besteht.

4. Verfahren zur Datenerfassung nach einem der Ansprüche 1 bis 3, **dadurch gekennzeichnet, dass** die Umgebungszone, die der Zelle (CELL) zugeordnet ist, bestimmt ist durch die Position der Zelle (CELL) im Matrixnetzwerk und eine Gruppe von benachbarten Zellen (Cv), die in einem vorgegebenen Abstand von der Zelle (CELL) im Matrixnetzwerk angeordnet sind.

5. Verfahren zur Datenerfassung nach einem der Ansprüche 1 bis 4, **dadurch gekennzeichnet, dass** die Umgebungszone aus benachbarten Zellen (Cv) besteht, die während des sequentiellen Abtastschritts (S32-S37, S41, S42) vor der Zelle (CELL) abgetastet wurden.

6. Verfahren zur Datenerfassung nach einem der Ansprüche 1 bis 5, **dadurch gekennzeichnet, dass** während des Aktualisierungsschritts (S45) einer vorhandenen eingrenzenden Zone ein Gesamtgewicht aktualisiert wird, das der Summe des jeweiligen Gewichts (I_{R, C}) jeder Zelle (CELL), die der umfassenden Zone angehört, entspricht.

7. Verfahren zur Datenerfassung nach Anspruch 6, **dadurch gekennzeichnet, dass** es überdies einen Schritt des Berechnens der Position eines Baryzentrums einer eingrenzenden Zone anhand der Koordinaten (CELL_X, CELL_Y) der Zellen (CELL) umfasst, die der eingrenzenden Zone angehören, gewichtet mittels des auf die jeweilige Zelle (CELL) bezogenen Gewichts (I_{R, C}) im Verhältnis zu dem Gesamtgewicht.

8. Verfahren zur Datenerfassung nach einem der Ansprüche 1 bis 7, **dadurch gekennzeichnet, dass** es überdies einen Schritt der Analyse der Gewichtswerte umfasst, die einer Gruppe benachbarter Zellen zugeordnet sind, die die Zelle (CELL) einschließt, um zwei eingrenzende nebeneinander liegende Zonen in der vorhandenen eingrenzenden Zone zu identifizieren.

9. Verfahren zur Datenerfassung nach einem der Ansprüche 1 bis 8, wobei die Zellen (25) an jeder Kreuzung von einer Zeile (23) und einer Spalte (24) eines Netzwerks aus Leiterbahnen bestimmt werden, die aus Zeilen (23) und Spalten (24) bestehen, **dadurch gekennzeichnet, dass** der Schritt des sequenziellen Abtastens (S32-S37, S41, S42) der Zellen (25) darin besteht, nacheinander jede Zeile (23) des Netzwerks mit Energie zu versorgen und für jede mit Energie versorgte Zeile und nacheinander für jede Spalte (24) ein elektrisches Merkmal zu messen, das charakteristisch für einen Impedanzpegel (I_{R, C}) ist.

10. Vorrichtung zur Erfassung von Daten eines mehrpoligen Matrix-Tastsensors (11), umfassend ein Matrixnetzwerk aus Zellen (25), umfassend:
- Mittel (13, 14) zum sequenziellen Abtasten der Zellen (25) des Matrixnetzwerks;
- Mittel (13, 14) zum Messen eines elektrischen Merkmals für jede Zelle, das charakteristisch für ein Gewicht (I_{R, C}) jeder Zelle (25) ist,
**dadurch gekennzeichnet, dass** sie überdies Folgendes umfasst:
- Mittel (13, 14) zum Vergleichen des Gewichts (I_{R, C}) jeder Zelle (CELL) mit einem oder mehreren vorgegebenen signifikanten Gewichtswerten (I_{T});
- Mittel (13, 14) zum Speichern der auf die Zelle (CELL) bezogenen Daten, umfassend mindestens das Gewicht (I_{R, C}) und die Koordinaten (CELL_X, CELL_Y) der Zelle (CELL) in dem Matrixnetzwerk, wenn das Gewicht (I_{R, C}) in einem Bereich von signifikanten Werten liegt;
- Mittel (13, 14) zum Verifizieren der Existenz einer Speicherung von Daten, die auf mindestens eine der benachbarten Zellen (Cv) bezogen sind, die sich in einer Umgebungszone befinden, die der Zelle (CELL) zugeordnet ist; und
- Mittel (13, 14) zum Aktualisieren einer vorhandenen eingrenzenden Zone durch Speichern der Daten, die auf die Zelle (CELL) bezogen sind, in der vorhandenen umfassenden Zone, wenn Daten, die auf mindestens eine benachbarte Zelle (Cv) bezogen sind, die der vorhandenen umfassenden Zone angehört, gespeichert wurden.

11. Mehrpoliger Matrix-Tastsensor (11), umfassend ein Matrixnetzwerk (21, 22) aus Leiterbahnen, die aus Zeilen (23) und Spalten (24) bestehen, wobei an den Kreuzungen der Zeilen (23) und der Spalten (24) Zellen (25) bestimmt sind, **dadurch gekennzeichnet, dass** er Mittel (13, 14) zur Datenerfassung umfasst, die angepasst sind, das Verfahren zur Datenerfassung nach einem der Ansprüche 1 bis 9 umzusetzen.

12. Tastbildschirm (10), umfassend einen Anzeigebildschirm (12), der anliegend an einen mehrpoligen Matrix-Tastsensor (11) nach Anspruch 11 angeordnet ist.

## Claims

1. A method for acquiring data from a multi-touch crossbar-network sensor (11), comprising a crossbar network of cells (25), said method comprising the following steps:
- sequentially scanning (S32-S37, S41, S42) the cells of the crossbar network;
- measuring (S38) an electrical characteristic at the level of each cell, the electrical characteristic being representative of a weight (I_{R, C}) of each cell (25);
**characterized in that** it additionally comprises the following steps for each cell (CELL):
- comparing (S39) the weight (I_{R, C}) with one or more predetermined significant weight values (I_{T});
- recording (S43) the data associated with said cell (CELL), comprising at least said weight (I_{R, C}) and the coordinates (CELL_X, CELL_Y) of said cell (CELL) in the crossbar network when the weight is within a range of significant values;
- verifying (S44) the existence of a data record associated with at least one of said neighboring cells (Cv) comprised in a neighboring area associated with said cell (CELL); and
- updating (S45) an existing bounding area by recording, within said existing bounding area, data associated with said cell (CELL), if data associated with at least one neighboring cell (Cᵥ) belonging to said existing bounding area has been recorded.

2. The method for acquiring data according to Claim 1, **characterized in that** it further comprises a step of creating (S46) a new bounding area by recording the data of said cell (CELL) in the new bounding area if no data associated with a neighboring cell (Cᵥ) located in said neighboring area associated with said cell (CELL) has been recorded.

3. The method for acquiring data according to any one of Claims 1 or 2, **characterized in that** said neighboring area associated with said cell (CELL) is made up of a configurable number of neighboring cells (Cᵥ) of said cell (CELL) in the crossbar network.

4. The method for acquiring data according to any one of Claims 1 to 3, **characterized in that** said neighboring area associated with said cell (CELL) is defined by the position of said cell (CELL) in the crossbar network and a set of neighboring cells (Cᵥ) that are situated at a predetermined distance from said cell (CELL) in the crossbar network.

5. The method for acquiring data according to any one of Claims 1 to 4, **characterized in that** said neighboring area is made up of neighboring cells (Cᵥ) that were scanned before said cell (CELL) during the sequential scanning step (S32-S37, S41, S42).

6. The method for acquiring data according to any one of Claims 1 to 5, **characterized in that** during said step of updating (S45) an existing bounding area, a cumulative weight corresponding to the sum of the weights (I_{R, C}) of each cell (CELL) belonging to said existing bounding area is updated.

7. The method for acquiring data according to Claim 6, **characterized in that** it further comprises a step of calculating the position of a center of gravity of a bounding area based on the coordinates (CELL_X, CELL_Y) of said cells (CELL) belonging to said bounding area, weighted by said weight (I_{R, C}) associated with each cell (CELL) in relation to said cumulative weight.

8. The method for acquiring data according to any one of Claims 1 to 7, **characterized in that** it further comprises a step of analyzing the values of the weights associated with a set of adjacent cells including said cell (CELL) so as to identify two adjacent bounding areas within said existing bounding area.

9. The method for acquiring data according to any one of Claims 1 to 8, said cells (25) being defined at each intersection of a row (23) and a column (24) of a network of strip conductors that are made up of rows (23) and columns (24), **characterized in that** the method of sequentially scanning (S32-S37, S41, S42) the cells (25) consists of successively energizing each row (23) of the network and of measuring, for each energized row, and successively at the level of each column (24), an electrical characteristic representative of an impedance level (I_{R, C}).

10. A device for acquiring data from a multi-touch crossbar-network sensor (11), comprising a crossbar network of cells (25), the device comprising:
- means for sequentially scanning (13, 14) the cells (25) of the crossbar network;
- means for measuring (13, 14) an electrical characteristic at the level of each cell, the electrical characteristic being representative of a weight (I_{R, C}) of each cell (25),
**characterized in that** it additionally comprises:
- means for comparing (13, 14) the weight (I_{R, C}) of each cell (CELL) with one or more predetermined significant weight values (I_{T});
- means for recording (13, 14) data associated with said cell (CELL), the cell data comprising at least said weight (I_{R, C}) and the coordinates (CELL_X, CELL_Y) of said cell (CELL) in the crossbar network when the weight (I_{R, C}) is within a range of significant values;
- means for verifying (13, 14) the existence of a data record associated with at least one of said neighboring cells (Cv) located in a neighboring area associated with said cell (CELL); and
- means for updating (13, 14) an existing bounding area by recording, within said existing bounding area, data associated with said cell (CELL), if data associated with at least one neighboring cell (Cv) belonging to the existing bounding area has been recorded.

11. A multi-touch crossbar-network sensor (11), comprising a crossbar network (21, 22) of strip conductors made up of rows (23) and columns (24), the cells being defined at the intersections of said rows (23) and said columns (24), **characterized in that** it comprises means for acquiring (13, 14) data, said means being adapted to implementing the acquisition method according to any one of Claims 1 to 9.

12. A touch screen (10), comprising a display screen (12) juxtaposed with a multi-touch crossbar-network sensor (11) according to Claim 11.
